# EUROPÄISCHE PATENTSCHRIFT

(11) **EP 3 256 353 B1**
(45) Veröffentlichungstag und Bekanntmachung des Hinweises auf die Patenterteilung: **24.03.2021**
(21) Anmeldenummer: 16701329.1
(22) Anmeldetag: 22.01.2016
(51) Int. Cl.: B60T 7/12, B62D 15/02, B60W 30/06, B60N 2/00, G05D 1/02, G06K 9/00, G08G 1/16, G08G 1/14

(54) **VERFAHREN UND VORRICHTUNG ZUM ÜBERWACHEN EINES SICH IN EINEM AUTONOMEN BETRIEBSMODUS UND AUF EINEM PARKPLATZ BEFINDENDEN FAHRZEUGS**
METHOD AND DEVICE FOR MONITORING A VEHICLE WHICH IS IN AN AUTONOMOUS OPERATING MODE AND IS LOCATED IN A PARKING SPACE
PROCÉDÉ ET DISPOSITIF POUR CONTRÔLER UN VÉHICULE SE TROUVANT EN MODE DE FONCTIONNEMENT AUTONOME SUR UNE PLACE DE STATIONNEMENT

(30) Priorität: 12.02.2015 DE 102015202488
(43) Veröffentlichungstag der Anmeldung: 20.12.2017
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2016/051317
(87) Internationale Veröffentlichungsnummer: WO 2016/128200

(56) Entgegenhaltungen:
- DE-A1-102012 007 986
- DE-A1-102012 222 562
- JP-A- 2011 230 549
- KR-A- 20140 073 131
- US-A1- 2005 270 177
- US-A1- 2011 082 588
- US-A1- 2014 379 197

## Beschreibung

Die Erfindung betrifft ein Verfahren und eine Vorrichtung zum Überwachen eines sich in einem autonomen Betriebsmodus und auf einem Parkplatz befindenden Fahrzeugs. Die Erfindung betrifft ferner ein Computerprogramm.

### Stand der Technik

Die Offenlegungsschrift US 2014/379197 A1 zeigt ein autonom fahrendes Fahrzeug innerhalb eines Parkplatzes, welches mittels eines Kamerasystems sein Umfeld erfasst.

Die Offenlegungsschrift JP 2011 230549 A zeigt eine Vorrichtung zum Unterstützen eines Parkens von Kraftfahrzeugen.

Die Offenlegungsschrift US 2005/270177 A1 zeigt einen Parkassistenten.

Die Offenlegungsschrift DE 10 2012 007 986 A1 zeigt ein ferngesteuertes Rangieren eines Kraftfahrzeugs mithilfe eines tragbaren Kommunikationsgeräts.

Die Offenlegungsschrift KR 2014 0073131 A zeigt ein Überwachen eines Fahrzeugs mittels einer fahrzeugexternen Kamera.

Die Offenlegungsschrift US 2011/082588 A1 beschreibt ein automatisches Parken von Fahrzeugen.

Die Offenlegungsschrift DE 10 2012 222 562 A1 zeigt ein System für bewirtschaftete Parkflächen zur Überführung eines Fahrzeugs von einer Startposition in eine Zielposition.

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle.

Bei diesem autonomen Valet Parking kann es sein, dass sich noch Personen im Fahrzeug befinden. Dies kann zu Problemen führen.

So können diese Personen während des Parkvorgangs das Fahrzeug verlassen. Dies kann zur Folge haben, dass diese Personen einen Betrieb des Parkplatzes stören. Insbesondere können diese Personen einen autonomen Valet Parking-Betrieb stören.

### Offenbarung der Erfindung

Die der Erfindung zugrunde liegende Aufgabe kann daher darin gesehen werden, ein effizientes Konzept bereitzustellen, mittels welchem sichergestellt werden kann, dass autonome Parkvorgänge auf einem Parkplatz nicht durch Personen gestört werden.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Überwachen eines sich in einem autonomen Betriebsmodus und auf einem Parkplatz befindenden Fahrzeugs bereitgestellt, gemäß Anspruch 1.

Gemäß einem weiteren Aspekt wird eine Vorrichtung zum Überwachen eines sich in einem autonomen Betriebsmodus und auf einem Parkplatz befindenden Fahrzeugs bereitgestellt, gemäß Anspruch 9.

Nach noch einem Aspekt wird ein Computerprogramm bereitgestellt, welches Programmcode zur Durchführung des erfindungsgemäßen Verfahrens umfasst, wenn das Computerprogramm auf einem Computer ausgeführt wird.

Die Erfindung umfasst also insbesondere und unter anderem den Gedanken, sicherzustellen, dass sich keine Personen mehr im Fahrzeug befinden, welches im Begriff ist, einen autonomen Parkvorgang auf dem Parkplatz durchzuführen oder einen solchen autonomen Parkvorgang bereits durchführt. Der erfindungsgemäße Grundgedanke ist hier insbesondere, dass eine Überprüfung stattfindet, ob sich eine oder mehrere Personen im Fahrzeug befinden. Sofern dies der Fall ist, werden eine oder mehrere Aktionen durchgeführt. Dadurch wird insbesondere der technische Vorteil bewirkt, dass effizient und optimal auf ein eventuelles Vorhandensein von Personen im Innenraum des Fahrzeugs reagiert werden kann. Entsprechend den durchgeführten Aktionen kann somit in vorteilhafter Weise verhindert werden, dass diese Personen einen Betrieb des Parkplatzes, also insbesondere einen Verkehrsfluss oder einen Verkehr auf dem Parkplatz, stören. Insbesondere kann so in vorteilhafter Weise bewirkt werden, dass ein Kollisionsrisiko einer Kollision zwischen den Personen und weiteren Objekten auf dem Parkplatz verringert werden kann. Denn sollten diese Personen aus dem Fahrzeug aussteigen, so könnte es zu einer Kollision mit den weiteren Objekten kommen. Da aber erfindungsgemäß eine oder mehrere Aktionen abhängig von der Überprüfung durchgeführt werden, kann entsprechend der gewählten Aktion ein solches Kollisionsrisiko verringert oder sogar ganz vermieden werden.

Dass das Fahrzeug in einem autonomen Betriebsmodus ist, heißt insbesondere, dass das Fahrzeug autonom fährt oder ferngesteuert geführt wird. In einem autonomen Betriebsmodus ist kein Eingriff eines Fahrers mehr erforderlich, um das Fahrzeug zu führen. Das Fahrzeug kann selbstständig, also autonom, auf dem Parkplatz fahren. Insbesondere kann das Fahrzeug in einem autonomen Betriebsmodus ferngesteuert geführt werden.

Das heißt also insbesondere, dass autonom im Sinne der vorliegenden Erfindung insbesondere bedeutet, dass das Fahrzeug selbstständig, also ohne einen Eingriff eines Fahrers, auf dem Parkplatz navigiert oder fährt oder ferngesteuert geführt wird. Das Fahrzeug fährt selbstständig, also autonom, auf dem Parkplatz, ohne dass ein Fahrer hierfür das Fahrzeug steuern müsste oder sich im Fahrzeug befinden müsste. Ein Führen oder ein autonomes Fahren umfasst insbesondere eine Quer- und/oder Längsführung des Fahrzeugs. Ein solch autonom fahrendes Fahrzeug, das automatisch ein- und ausparken kann, wird im Sinne der vorliegenden Erfindung als ein AVP-Fahrzeug bezeichnet. Hierbei steht "AVP" für "Automatic Valet Parking" und kann mit "Automatischer Parkvorgang" oder mit "Autonomer Parkvorgang" übersetzt werden. Fahrzeuge, die diese AVP-Funktionalität nicht aufweisen, werden beispielsweise als normale Fahrzeuge bezeichnet.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Dadurch also, dass das erfindungsgemäße Konzept darauf beruht, dass sich das Fahrzeug in einem autonomen Betriebsmodus befinden muss, um entsprechend der Überprüfung eine oder mehrere Aktionen durchzuführen, wird insbesondere sichergestellt, dass nicht schon bei einer normalen Fahrt, also wenn sich das Fahrzeug nicht im autonomen Betriebsmodus befindet, Aktionen durchgeführt werden. Denn bei einer solchen normalen Fahrt, also wenn sich das Fahrzeug nicht im autonomen Betriebsmodus befindet, muss ein Fahrer im Fahrzeug sein, um das Fahrzeug manuell zu führen. Ein solcher Betriebsmodus, in welchem ein Fahrer manuell das Fahrzeug führen muss, kann insbesondere als ein manueller Betriebsmodus bezeichnet werden. Das heißt also insbesondere, dass das erfindungsgemäße Konzept nur dann durchgeführt wird, wenn das Fahrzeug autonom unterwegs ist, sich also unmittelbar vor einem autonomen Parkvorgang oder bereits bei der Durchführung des autonomen Parkvorgangs befindet.

Ein autonomer Parkvorgang umfasst insbesondere eine autonome Fahrt von einer Abgabeposition zu einer Parkposition.

Ein autonomer Parkvorgang umfasst insbesondere ein autonomes Einparken des Fahrzeugs an einer Parkposition.

Ein autonomer Parkvorgang umfasst insbesondere ein Ausparken des Fahrzeugs aus einer Parkposition.

Ein autonomer Parkvorgang des Fahrzeugs umfasst insbesondere ein autonomes Fahren von einer Parkposition zu einer Abholposition.

Eine Abgabeposition im Sinne der vorliegenden Erfindung ist eine Position, an welcher ein Fahrer des Fahrzeugs sein Fahrzeug für einen autonomen Parkvorgang abstellen kann. Die Abgabeposition liegt vorzugsweise innerhalb eines Eingangsbereichs des Parkplatzes.

Eine Abholposition im Sinne der vorliegenden Erfindung ist eine Position, an welcher ein Fahrer des Fahrzeugs sein Fahrzeug nach einem autonomen Parkvorgang abholen kann. Die Abholposition liegt beispielsweise im Bereich eines Ausgangs des Parkplatzes, also innerhalb eines Ausgangsbereichs des Parkplatzes.

Nach einer Ausführungsform sind die Abgabeposition und die Abholposition verschieden.

Nach einer Ausführungsform sind die Abholposition und die Abgabeposition identisch.

Erfindungsgemäß ist vorgesehen, dass die eine oder die mehreren Aktionen umfassen, dass über ein Kommunikationsnetzwerk ein Stoppbefehl an das Fahrzeug gesendet wird, dass das Fahrzeug stoppen soll. Dadurch wird insbesondere der technische Vorteil bewirkt, dass das Fahrzeug ansprechend auf den Stoppbefehl stoppen kann. Das heißt also insbesondere, dass, wenn das Fahrzeug den Stoppbefehl ausführt, es stoppt. Ein gestopptes Fahrzeug stellt in der Regel ein geringeres Kollisionsrisiko oder eine geringere Kollisionsgefährdung dar als ein fahrendes Fahrzeug. Somit kann in vorteilhafter Weise eine Kollision des Fahrzeugs mit weiteren Fahrzeugen auf dem Parkplatz vermieden werden.

In einer anderen Ausführungsform ist vorgesehen, dass die eine oder die mehreren Aktionen umfassen, dass über ein Kommunikationsnetzwerk ein Umleitbefehl umfassend eine Ausweichposition an das Fahrzeug gesendet wird, dass das Fahrzeug zu der Ausweichposition autonom fahren soll. Dadurch wird insbesondere der technische Vorteil bewirkt, dass das Fahrzeug ansprechend auf einen Empfang des Umleitbefehls zu der Ausweichposition autonom fahren kann. Dadurch kann beispielsweise das Fahrzeug aus einem Verkehr des Parkplatzes herausgenommen werden, sodass hierüber ein Kollisionsrisiko verringert werden kann. Das heißt also, dass, wenn das Fahrzeug den Umleitbefehl ausführt, es zu der Ausweichposition autonom fährt.

In einer anderen Ausführungsform ist vorgesehen, dass zusätzlich eine vom Fahrzeug abzufahrende Ausweichtrajektorie zu der Ausweichposition über das Kommunikationsnetzwerk an das Fahrzeug gesendet wird. Dadurch wird insbesondere der technische Vorteil bewirkt, dass dem Fahrzeug vorgegeben werden kann, auf welcher Trajektorie, also auf welcher Route, es zu der Ausweichposition fahren soll. Denn in der Regel ist ein Wissen, welches benötigt wird, um eine optimale Ausweichtrajektorie zu ermitteln, fahrzeugextern größer als ein fahrzeuginternes Wissen. Das heißt also, dass fahrzeugextern eine bessere Ausweichtrajektorie ermittelt werden kann, die insbesondere einen Verkehr auf dem Parkplatz besser berücksichtigen kann. Das Fahrzeug kann somit optimal und effizient zu der Ausweichposition geführt werden und stellt somit eine geringere Gefährdung für einen Verkehr auf dem Parkplatz dar. Auch so kann ein Kollisionsrisiko noch weiter verringert werden.

In einer anderen Ausführungsform ist vorgesehen, dass die eine oder die mehreren Aktionen umfassen, dass mittels einer fahrwegsteuernden Infrastruktur ein Fahrweg des Fahrzeugs blockiert und/oder umgeleitet wird. Dadurch wird insbesondere der technische Vorteil bewirkt, dass eine Weiterfahrt des Fahrzeugs verhindert werden kann. Insbesondere wird der technische Vorteil bewirkt, dass das Fahrzeug aufgrund der Umleitung aus einem Verkehr oder Verkehrsfluss des Parkplatzes genommen werden kann. Insbesondere kann das Fahrzeug aus einem reservierten Bereich herausgeleitet werden, wobei ein solcher reservierter Bereich ein Bereich ist, der nur für AVP-Fahrzeuge zugelassen oder reserviert ist. Denn in einem solchen Bereich sollten üblicherweise keine Personen sich aufhalten, da dieser Aufenthalt einen normalen Betrieb in diesem reservierten Bereich stören könnte.

Nach einer anderen Ausführungsform ist vorgesehen, dass die fahrwegsteuernde Infrastruktur einen oder mehrere Signalgeber umfassen. Solche Signalgeber werden umgangssprachlich auch als Ampeln bezeichnet. So kann beispielsweise mittels der Signalgeber einem Verkehr angezeigt werden, dass es stoppen soll, sodass es sich beispielsweise nicht weiter dem Fahrzeug nähert. Insbesondere kann so dem Fahrzeug mit den Personen im Innenraum signalisiert werden, dass es stoppen soll. Denn üblicherweise ist ein Fahrzeug, welches sich in einem autonomen Betriebsmodus befindet, in der Lage, solche Signalgeber zu erkennen und entsprechend dem gesendeten Signal auch zu halten.

In einer anderen Ausführungsform ist vorgesehen, dass die fahrwerksteuernde Infrastruktur eine oder mehrere Schranken umfasst. Das heißt also insbesondere, dass beispielsweise eine oder mehrere Schranken geschlossen werden, um einen Fahrweg des Fahrzeugs zu blockieren und/oder um das Fahrzeug umzuleiten.

In einer anderen Ausführungsform ist vorgesehen, dass die eine oder die mehreren Aktionen umfassen, dass mittels einer Signalisierungsinfrastruktur der oder den sich im Innenraum des Fahrzeugs befindenden Personen signalisiert wird, dass ein Aufenthalt im Innenraum unzulässig ist. Dadurch wird insbesondere der technische Vorteil bewirkt, dass die Personen, die sich im Fahrzeug befinden, Kenntnis darüber erlangen können, dass ihr Aufenthalt im Innenraum unzulässig, also insbesondere nicht gewünscht, ist. Somit können diese Personen dann den Entschluss treffen, das Fahrzeug nicht zu verlassen, was wiederum verhindern würde, dass diese Personen einen Betrieb des Parkplatzes stören könnten.

Nach einer Ausführungsform umfasst die Signalisierungsinfrastruktur einen akustischen Signalgeber und/oder einen visuellen Signalgeber und/oder ein Hinweisschild und/oder einen haptischen Signalgeber. Ein visueller Signalgeber umfasst beispielsweise einen Warnblinker, ein Warnlicht oder ein Blinklicht. Ein akustischer Signalgeber umfasst beispielsweise einen Lautsprecher, sodass Audiodurchsagen ermöglicht sind.

Nach einer Ausführungsform ist vorgesehen, dass die eine oder die mehreren Aktionen umfassen, dass der oder den sich im Innenraum des Fahrzeugs befindenden Personen im Fahrzeug signalisiert wird, dass ein Aufenthalt im Innenraum unzulässig ist. Aufgrund der Wahl des Dativs in der Formulierung "im Innenraum" ist also vorzugsweise vorgesehen, dass das Signalisieren im Innenraum stattfindet. Das heißt also, dass ein Signal im Innenraum ausgegeben wird. Ein Signal umfasst zum Beispiel ein akustischen und/oder ein haptisches und/oder ein visuelles Signal. Zum Beispiel können fahrzeuginterne Signalgeber hierfür verwendet werden. Zum Beispiel kann eine Fahrzeuginnenraumbeleuchtung an- und ausgeschaltet werden. Das Steuern des oder der fahrzeuginternen Signalgeber, zum Beispiel der Fahrzeuginnenraumbeleuchtung, wird entfernt über das Kommunikationsnetzwerk durchgeführt, es wird also eine entsprechende Fernsteuerung durchgeführt. Zum Beispiel kann entfernt ein Musiksystem, zum Beispiel ein Radiosystem, derart ferngesteuert werden, dass über das Musiksystem eine Audiodurchsage, also ein Audiosignal, ausgegeben wird. Die Fahrzeuginsassen werden somit in vorteilhafter Weise direkt informiert. So kann zum Beispiel das Parkplatzmanagement diese Fernsteuerung veranlassen. Das heißt also, dass die Ausgabe der Information (haptisch und/oder visuell und/oder akustisch), dass der Aufenthalt unzulässig ist, im Fahrzeug ausgegeben wird, also fahrzeugintern ausgegeben wird.

Nach einer Ausführungsform ist vorgesehen, dass die eine oder die mehreren Aktionen umfassen, dass ein Parkplatzpersonal zum Fahrzeug beordert wird. Dadurch wird insbesondere der technische Vorteil bewirkt, dass das Parkplatzpersonal die Situation schnell und effizient klären kann.

In einer anderen Ausführungsform ist vorgesehen, dass das Überprüfen umfasst, dass mittels einer Fahrzeugsensorik der Innenraum des Fahrzeugs zumindest teilweise, insbesondere vollständig, sensorisch erfasst wird, so dass der Erfassung entsprechende Sensordaten auf ein Vorhandensein von einer oder mehreren Personen analysiert werden. Dadurch wird insbesondere der technische Vorteil bewirkt, dass die Überprüfung mittels einer bereits vorhandenen Sensorik effizient durchgeführt werden kann, hier insbesondere die Fahrzeugsensorik.

Eine Fahrzeugsensorik umfasst nach einer Ausführungsform beispielsweise eine Videokamera zum Überwachen des Innenraums des Fahrzeugs. Eine solche Videokamera wird insbesondere auch als eine Fahrzeuginnenraumkamera bezeichnet.

In einer Ausführungsform umfasst die Fahrzeugsensorik einen oder mehrere Sitzbelegungssensoren, die eingerichtet oder ausgebildet sind, einen Belegungszustand von einem oder von mehreren Fahrzeugsitzen zu erfassen.

Die Fahrzeugsensorik generiert oder erzeugt Sensordaten entsprechend der sensorischen Erfassung. Diese Sensordaten werden dann auf ein Vorhandensein von einer oder mehreren Personen analysiert.

Gemäß einer weiteren Ausführungsform ist vorgesehen, dass die Sensordaten über ein Kommunikationsnetzwerk an eine fahrzeugexterne Verarbeitungseinrichtung gesendet werden, die die Analyse durchführt. Dadurch wird insbesondere der technische Vorteil bewirkt, dass die Analyse fahrzeugextern durchgeführt werden kann.

Nach einer Ausführungsform ist vorgesehen, dass über das Kommunikationsnetzwerk vom Fahrzeug ein Ergebnis der Analyse der Sensordaten gesendet wird. Beispielsweise kann das Ergebnis an die erfindungsgemäße Vorrichtung gesendet werden.

Erfindungsgemäß ist vorgesehen, dass das Überprüfen umfasst, dass mittels eines fahrzeugexternen Überwachungssystems der Innenraum des Fahrzeugs auf ein Vorhandensein von einer oder mehreren Personen überwacht wird. Dadurch wird insbesondere der technische Vorteil bewirkt, dass eine effiziente Nutzung eines Überwachungssystems ermöglicht ist. Denn in der Regel weist ein Parkplatz an sich schon ein Überwachungssystem auf. Dieses wird nun noch zusätzlich dafür verwendet, um den Innenraum des Fahrzeugs auf ein Vorhandensein von einer oder mehreren Personen zu überwachen.

Das fahrzeugexterne Überwachungssystem umfasst nach einer Ausführungsform eine oder mehrere Videokameras.

Nach einer Ausführungsform umfasst die Überprüfungseinrichtung das fahrzeugexterne Überwachungssystem.

Nach einer Ausführungsform ist die Vorrichtung eingerichtet oder ausgebildet, das erfindungsgemäße Verfahren aus- oder durchzuführen.

Nach einer Ausführungsform ist die Steuerungseinrichtung ausgebildet oder eingerichtet, eine fahrwegsteuernde Infrastruktur und/oder eine Signalisierungsinfrastruktur zu steuern.

Nach einer Ausführungsform umfasst die Vorrichtung eine Kommunikationsschnittstelle, die ausgebildet ist, über ein Kommunikationsnetzwerk zu kommunizieren, also insbesondere Sensordaten zu empfangen. Insbesondere wird über die Kommunikationsschnittstelle der Stoppbefehl an das Fahrzeug gesendet. Insbesondere wird über die Kommunikationsschnittstelle der Umleitbefehl an das Fahrzeug gesendet. Insbesondere wird mittels der Kommunikationsschnittstelle die abzufahrende Ausweichtrajektorie an das Fahrzeug gesendet.

Entsprechend weist dann nach einer Ausführungsform das Fahrzeug ebenfalls eine Kommunikationsschnittstelle auf, die ausgebildet ist, über ein Kommunikationsnetzwerk entsprechende Befehle zu empfangen und/oder Sensordaten zu senden.

Das Kommunikationsnetzwerk umfasst nach einer Ausführungsform ein Mobilfunknetzwerk und/oder ein WLAN-Netzwerk.

Nach einer Ausführungsform ist vorgesehen, dass eine Kommunikation über das Kommunikationsnetzwerk verschlüsselt wird respektive ist.

Funktionalitäten der Vorrichtung ergeben sich analog aus Funktionalitäten des Verfahrens und umgekehrt. Das heißt also insbesondere, dass sich technische Merkmale betreffend die Vorrichtung aus entsprechenden Ausführungsformen des Verfahrens und umgekehrt ergeben.

Die Erfindung wird im Folgenden anhand von bevorzugten Ausführungsbeispielen näher erläutert. Hierbei zeigen
Fig. 1 ein Ablaufdiagramm eines Verfahrens zum Überwachen eines sich in einem autonomen Betriebsmodus und auf einem Parkplatz befindenden Fahrzeugs und
Fig. 2 eine Vorrichtung zum Überwachen eines sich in einem autonomen Betriebsmodus und auf einem Parkplatz befindenden Fahrzeugs.

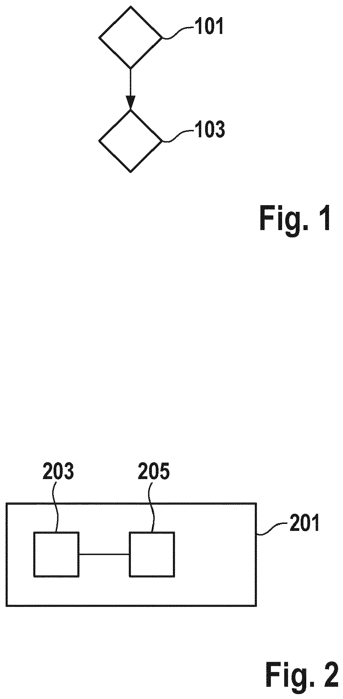

Fig. 1 zeigt ein Ablaufdiagramm eines Verfahrens zum Überwachen eines sich in einem autonomen Betriebsmodus und auf einem Parkplatz befindenden Fahrzeugs.

In einem Schritt 101 wird überprüft, ob sich im Innenraum des Fahrzeugs eine oder mehrere Personen befinden. In einem Schritt 103 wird abhängig von der Überprüfung eine Aktion durchgeführt. Insbesondere können abhängig von der Überprüfung mehrere Aktionen durchgeführt werden.

Das heißt also, dass, wenn die Überprüfung ergibt, dass sich im Innenraum des Fahrzeugs eine oder mehrere Personen befinden, eine oder mehrere Aktionen durchgeführt werden.

Sofern die Überprüfung ergibt, dass sich im Innenraum des Fahrzeugs keine Personen befinden, so wird keine Aktion oder so werden keine mehrere Aktionen durchgeführt.

Fig. 2 zeigt eine Vorrichtung 201 zum Überwachen eines sich in einem autonomen Betriebsmodus und auf einem Parkplatz befindenden Fahrzeugs.

Die Vorrichtung 201 umfasst eine Überprüfungseinrichtung 203 zum Überprüfen, ob sich im Innenraum des Fahrzeugs eine oder mehrere Personen befinden. Die Vorrichtung 201 umfasst ferner eine Steuerungseinrichtung 205 zum Steuern von einer oder mehreren Aktionen abhängig von der Überprüfung.

Die Vorrichtung 201 umfasst erfindungsgemäß ein fahrzeugexternes Überwachungssystem.

Nach einer Ausführungsform ist die Vorrichtung 201 eingerichtet, mit einer Fahrzeugsensorik zu kommunizieren, um den Innenraum des Fahrzeugs zumindest teilweise mittels der Fahrzeugsensorik sensorisch zu erfassen.

Das heißt also insbesondere, dass die zumindest teilweise sensorische Erfassung mittels der Fahrzeugsensorik mittels eines fahrzeugexternen Erfassungsbefehls getriggert oder ausgelöst oder gesteuert wird.

Denn in einem solchen autonomen Betriebsmodus eines Fahrzeugs, welches sich auf einem Parkplatz befindet, ist nach einer Ausführungsform eine Kommunikationsverbindung über ein Kommunikationsnetzwerk zwischen einem Parkplatzverwaltungsserver, der zum Beispiel die Vorrichtung umfassen kann, und dem Fahrzeug gebildet. Ein solcher Parkplatzverwaltungsserver verwaltet und/oder koordiniert einen Parkplatz respektive einen autonomen Parkvorgang auf dem Parkplatz.

Die Erfindung umfasst also insbesondere den Gedanken, ein technisches Konzept bereitzustellen, mittels welchem sichergestellt werden kann, dass sich keine Personen mehr in einem AVP-Fahrzeug während einer AVP-Fahrt befinden. Grundlage des erfindungsgemäßen Konzepts ist insbesondere, dass eine Überprüfung stattfindet, ob sich eine oder mehrere Personen im AVP-Fahrzeug befinden. Die Überprüfung wird dabei nach einer Ausführungsform durch mindestens eine der folgenden Aktionen durchgeführt:
1. Überprüfung mittels einer oder mehrerer Videokameras eines fahrzeugexternen Überwachungssystems, das auch als ein Parkraumüberwachungssystem bezeichnet werden kann. Zum Beispiel kann beim Start des autonomen Parkvorgangs an der Abgabeposition diese Überprüfung durchgeführt werden. Vorzugsweise kann nach einer weiteren Ausführungsform diese Überprüfung mittels des fahrzeugexternen Überwachungssystems auch noch während der AVP-Fahrt durchgeführt werden.
2. Eine Überprüfung mittels einer Fahrzeugsensorik umfassend eine oder mehrere Fahrzeugsensoren. Zum Beispiel kann ein Fahrzeugsensor ein Videosensor einer Innenraumkamera sein. Insbesondere kann ein solcher Fahrzeugsensor ein Sitzbelegungssensor sein.

Wird durch diese Maßnahmen, also durch diese Überprüfung, festgestellt, dass sich Personen oder auch nur eine Person im Fahrzeug befinden, insbesondere auf dem Fahrersitz befinden, dann wird auf jeden Fall die erste Aktion und optional eine beliebige Kombination der folgenden Aktionen 2-5 eingeleitet respektive gesteuert:
1. Das Fahrzeug erhält von einem Parkraumverwaltungssystem, also von dem Parkplatzverwaltungsserver, genauer gesagt von der Vorrichtung, über ein Kommunikationsnetzwerk einen Stoppbefehl.
2. Das Fahrzeug wird von dem Parkraummanagementsystem auf einen Ausweichplatz umgeleitet, was in vorteilhafter Weise ein Herausnehmen des Fahrzeugs aus einem Verkehr aus AVP-Fahrzeugen bewirkt. Insbesondere wird das Fahrzeug so aus einem AVP-Betrieb herausgenommen.
3. Mittels einer fahrwegsteuernden Infrastruktur, die beispielsweise fahrwegsteuernde Infrastrukturkomponenten, wie zum Beispiel einen oder mehrere Signalgeber (umgangssprachlich auch Ampel genannt) und/oder Schranken umfasst, wird ein Fahrweg des Fahrzeugs blockiert und eine (Weiter-)Fahrt des Fahrzeugs insbesondere unterbunden und/oder das Fahrzeug wird umgeleitet. Auch dies bewirkt in vorteilhafter Weise ein Herausnehmen des Fahrzeugs aus einem AVP-Verkehr und/oder aus einem AVP-Betrieb.
4. Mittels einer Signalisierungsinfrastruktur, die beispielsweise Infrastrukturelemente wie zum Beispiel Hinweisschilder, Warn-/Blinklichter, Audiodurchsagen mittels Lautsprecher, umfasst, wird einem Fahrer oder den Fahrzeuginsassen kenntlich gemacht, dass das Mitfahren nicht erwünscht/erlaubt ist.
5. Vom Parkraummanagementsystem wird ein Personal, also insbesondere das Parkplatzpersonal, beauftragt, die Situation zu klären. Dies umfasst beispielsweise, dass das Personal hinter dem Fahrzeug hergehen soll, um beispielsweise die Fahrzeuginsassen zu überprüfen.

Für die Ausführungsform, in welcher das Fahrzeug von einem autorisierten Personal gefahren wird, zum Beispiel weil das AVP-Fahrzeug defekt ist oder sich das Fahrzeug um ein Parkhaus-/Parkplatz-Dienstfahrzeug handelt, dann ist nach einer anderen Ausführungsform vorgesehen, dass diese Personenmitfahrt im Vorfeld als autorisiert definiert ist und somit auch nicht weiter verfolgt wird, also es werden keine Aktionen durchgeführt. Das heißt, dass nach einer Ausführungsform überprüft wird, ob der Aufenthalt einer oder von mehreren Personen im Innenraum des Fahrzeugs zuvor autorisiert wurde, zum Beispiel weil eine Personenmitfahrt angemeldet wurde. Bei Autorisierung werden die Aktionen nicht durchgeführt. Bei nicht vorhandener Autorisierung werden die Aktionen durchgeführt.

Durch das erfindungsgemäße Konzept können insbesondere die folgenden Probleme vermieden werden, die sich ergeben können, wenn sich Personen im AVP-Fahrzeug während einer AVP-Fahrt befinden:
Die Personen könnten irgendwann das AVP-Fahrzeug verlassen. Dies hätte zur Folge, dass im Folgenden Personen im Parkhaus/auf dem Parkplatz laufen und einen AVP-Betrieb stören. Dies würde einen AVP-Betrieb der AVP-Fahrzeuge komplexer werden lassen. Dies insbesondere dann, wenn für einen AVP-Betrieb ein exklusiver Bereich reserviert ist.
2. Des Weiteren kann es sein, dass das AVP-Fahrzeug nicht verschlossen ist, wobei sich ein Schlüssel im Fahrzeug befindet. Auch aus diesem Grund muss gewährleistet sein, dass durch (nicht autorisierte) Personen kein Missbrauch an dem Fahrzeug (zum Beispiel durch Diebstahl von Gegenständen aus dem Fahrzeug) respektive mit dem Fahrzeug (Fahren mit dem Fahrzeug) durchgeführt wird.
3. Der Fahrer könnte zum Beispiel in einen AVP-Prozessor eingreifen respektive diesen übernehmen. Dadurch könnte ein gesamter AVP-Betrieb, also ein Parkraumprozess für das AVP, gestört werden. Gegebenenfalls müsste dieser AVP-Betrieb unterbrochen werden. Zum Beispiel, weil der Fahrer die zugrunde liegenden Rahmenbedingungen (zum Beispiel hinsichtlich Geschwindigkeit und Vorfahrtsregeln) nicht einhält.

Aus den vorstehend genannten Problemen ist die erfindungsgemäße Erkenntnis gereift, dass sich während eines AVP-Vorgangs keine Person mehr im Fahrzeug befinden dürfen. Eine Ausnahme kann zum Beispiel sein, wenn das Fahrzeug von einem autorisierten Personal gefahren wird. Zum Beispiel, weil ein AVP-Fahrzeug einen Fehler hat und aus dem Weg geräumt werden muss.

## Patentansprüche

1. Verfahren zum Überwachen eines sich in einem autonomen Betriebsmodus und auf einem Parkplatz befindenden Fahrzeugs,
- wobei überprüft (101) wird, ob sich im Innenraum des Fahrzeugs eine oder mehrere Personen befinden,
- wobei abhängig von der Überprüfung eine oder mehrere Aktionen durchgeführt (103) werden,
- wobei die eine oder die mehreren Aktionen durchgeführt werden, wenn sich eine oder mehrere Personen im Innenraum des Fahrzeugs befinden,
- **dadurch gekennzeichnet, dass** mittels eines fahrzeugexternen Überwachungssystems der Innenraum des Fahrzeugs auf ein Vorhandensein von einer oder mehreren Personen überwacht wird,
- wobei die eine oder die mehreren Aktionen umfassen, dass über ein Kommunikationsnetzwerk ein Stoppbefehl an das Fahrzeug gesendet wird, dass das Fahrzeug stoppen soll.

2. Verfahren nach Anspruch 1, wobei die eine oder die mehreren Aktionen umfassen, dass über ein Kommunikationsnetzwerk ein Umleitbefehl umfassend eine Ausweichposition an das Fahrzeug gesendet wird, dass das Fahrzeug zu der Ausweichposition autonom fahren soll.

3. Verfahren nach Anspruch 2, wobei zusätzlich eine vom Fahrzeug abzufahrende Ausweichtrajektorie zu der Ausweichposition über das Kommunikationsnetzwerk an das Fahrzeug gesendet wird.

4. Verfahren nach einem der vorherigen Ansprüche, wobei die eine oder die mehreren Aktionen umfassen, dass mittels einer fahrwegsteuernden Infrastruktur ein Fahrweg des Fahrzeugs blockiert und/oder umgeleitet wird.

5. Verfahren nach einem der vorherigen Ansprüche, wobei die eine oder die mehreren Aktionen umfassen, dass mittels einer Signalisierungsinfrastruktur der oder den sich im Innenraum des Fahrzeugs befindenden Personen signalisiert wird, dass ein Aufenthalt im Innenraum unzulässig ist.

6. Verfahren nach einem der vorherigen Ansprüche, wobei das Überprüfen umfasst, dass mittels einer Fahrzeugsensorik der Innenraum des Fahrzeugs zumindest teilweise sensorisch erfasst wird, so dass der Erfassung entsprechende Sensordaten auf ein Vorhandensein von einer oder mehreren Personen analysiert werden.

7. Verfahren nach Anspruch 6, wobei die Sensordaten über ein Kommunikationsnetzwerk an eine fahrzeugexterne Verarbeitungseinrichtung gesendet werden, die die Analyse durchführt.

8. Verfahren nach einem der vorherigen Ansprüche, wobei die eine oder die mehreren Aktionen umfassen, dass der oder den sich im Innenraum des Fahrzeugs befindenden Personen im Fahrzeug signalisiert wird, dass ein-Aufenthalt im Innenraum unzulässig ist.

9. Vorrichtung (201) zum Überwachen eines sich in einem autonomen Betriebsmodus und auf einem Parkplatz befindenden Fahrzeugs, umfassend:
- eine Überprüfungseinrichtung (203) zum Überprüfen, ob sich im Innenraum des Fahrzeugs eine oder mehrere Personen befinden, und
- eine Steuerungseinrichtung (205) zum Steuern von einer oder mehreren Aktionen abhängig von der Überprüfung, wobei die eine oder die mehreren Aktionen durchgeführt werden, wenn sich eine oder mehrere Personen im Innenraum des Fahrzeugs befinden,
**dadurch gekennzeichnet, dass** die eine oder die mehreren Aktionen umfassen, dass über ein Kommunikationsnetzwerk ein Stoppbefehl an das Fahrzeug gesendet wird, dass das Fahrzeug stoppen soll,
- wobei die Überprüfungseinrichtung (203) ein fahrzeugexternes Überwachungssystem zum Überwachen des Innenraums des Fahrzeugs auf ein Vorhandensein von einer oder mehreren Personen umfasst,
- wobei die Vorrichtung (201) eine Kommunikationsschnittstelle umfasst, die ausgebildet ist, über das Kommunikationsnetzwerk zu kommunizieren und den Stoppbefehl an das Fahrzeug zu senden.

10. Computerprogramm, umfassend Programmcode zur Durchführung des Verfahrens nach einem der Ansprüche 1 bis 8, wenn das Computerprogramm auf einem Computer ausgeführt wird.

## Claims

1. Method for monitoring a vehicle which is in an autonomous operating mode and in a parking space,
- wherein it is checked (101) whether there are one or more persons located in the passenger compartment of the vehicle,
- wherein one or more actions are carried out (103) as a function of the checking,
- wherein the one or more actions are carried out if one or more persons are located in the passenger compartment of the vehicle,
- **characterized in that**
by means of a vehicle-external monitoring system the passenger compartment of the vehicle is monitored for the presence of one or more persons,
- wherein the one or more actions comprise the fact that a stop command, indicating that the vehicle should stop, is sent to the vehicle via a communication network.

2. Method according to Claim 1, wherein the one or more actions comprise the fact that a divert command comprising an avoidance position and indicating that the vehicle should drive autonomously to the avoidance position is sent to the vehicle via a communication network.

3. Method according to Claim 2, wherein in addition an avoidance trajectory to be travelled along by the vehicle to the avoidance position is sent to the vehicle via the communication network.

4. Method according to one of the preceding claims, wherein the one or more actions comprise the fact that a driving path of the vehicle is blocked and/or diverted by means of driving-path-controlling infrastructure.

5. Method according to one of the preceding claims, wherein the one or more actions comprise the fact that it is signalled, by means of signalling infrastructure, to the one or more persons located in the passenger compartment of the vehicle that it is not permissible to stay in the passenger compartment.

6. Method according to one of the preceding claims, wherein the checking comprising the fact that the passenger compartment of the vehicle is at least partially sensed by means of a vehicle sensor system so that sensor data corresponding to the sensing is analyzed for the presence of one or more persons.

7. Method according to Claim 6, wherein the sensor data is transmitted via a communication network to a vehicle-external processing device which carries out the analysis.

8. Method according to one of the preceding claims, wherein the one or more actions comprise the fact that it is signalled in the vehicle to the persons located in the passenger compartment of the vehicle that it is not admissible to stay in the passenger compartment.

9. Device (201) for monitoring a vehicle which is in an autonomous operating mode and located in a parking space, comprising:
- a checking device (203) for checking whether one or more persons are located in the passenger compartment of the vehicle, and
- a control apparatus (205) for controlling one or more actions as a function of the checking, wherein the one or more actions are carried out if one or more persons are located in the passenger compartment of the vehicle,
**characterized in that** the one or more actions comprise the fact that a stop command indicating that the vehicle should stop is sent to the vehicle via a communication network,
- wherein the checking device (203) comprises a vehicle-external monitoring device for monitoring the passenger compartment of the vehicle for the presence of one or more persons,
- wherein the device (201) comprises a communication interface which is designed to communicate via the communication network and to send the stop command to the vehicle.

10. Computer program comprising program code for carrying out the method according to one of Claims 1 to 8 when the computer program is run on a computer.

## Revendications

1. Procédé permettant de surveiller un véhicule se trouvant dans un mode de fonctionnement autonome et sur une place de stationnement,
- dans lequel on vérifie (101) si une ou plusieurs personnes se trouvent dans l'habitacle du véhicule,
- dans lequel une ou plusieurs actions sont effectuées (103) en fonction de la vérification,
- dans lequel ladite une ou les plusieurs actions sont effectuées si une ou plusieurs personnes se trouvent dans l'habitacle du véhicule,
- **caractérisé en ce qu'**au moyen d'un système de surveillance externe au véhicule, l'habitacle du véhicule est surveillé quant à la présence d'une ou de plusieurs personnes,
- ladite une ou les plusieurs actions comprenant le fait qu'une commande d'arrêt indiquant que le véhicule doit s'arrêter est envoyée au véhicule par un réseau de communication.

2. Procédé selon la revendication 1, dans lequel ladite une ou les plusieurs actions comprennent le fait que par un réseau de communication, une commande de déviation comprenant une position de contournement et indiquant que le véhicule doit se rendre de manière autonome à la position de contournement est envoyée au véhicule.

3. Procédé selon la revendication 2, dans lequel une trajectoire de contournement à parcourir par le véhicule jusqu'à la position de contournement est envoyée en plus au véhicule par le réseau de communication.

4. Procédé selon l'une quelconque des revendications précédentes, dans lequel ladite une ou les plusieurs actions comprennent le fait qu'un trajet du véhicule est bloqué et/ou dévié au moyen d'une infrastructure commandant le trajet.

5. Procédé selon l'une quelconque des revendications précédentes, dans lequel ladite une ou les plusieurs actions comprennent le fait qu'une infrastructure de signalisation signale à la personne ou aux personnes se trouvant dans l'habitacle du véhicule qu'un séjour dans l'habitacle est inadmissible.

6. Procédé selon l'une quelconque des revendications précédentes, dans lequel la vérification comprend le fait qu'un système de capteurs de véhicule détecte l'habitacle du véhicule au moins partiellement à l'aide de capteurs de sorte que des données de capteur correspondant à la détection sont analysées quant à la présence d'une ou de plusieurs personnes.

7. Procédé selon la revendication 6, dans lequel les données de capteur sont envoyées sur un réseau de communication à un dispositif de traitement, externe au véhicule, qui procède à l'analyse.

8. Procédé selon l'une quelconque des revendications précédentes, dans lequel ladite une ou les plusieurs actions comprennent le fait qu'il est signalé à la personne ou aux personnes se trouvant dans l'habitacle du véhicule qu'un séjour dans l'habitacle est inadmissible.

9. Dispositif (201) permettant de surveiller un véhicule se trouvant dans un mode de fonctionnement autonome et sur une place de stationnement, comprenant :
- un dispositif de vérification (203) pour vérifier si une ou plusieurs personnes se trouvent dans l'habitacle du véhicule, et
- un dispositif de commande (205) pour commander une ou plusieurs actions en fonction de la vérification, ladite une ou les plusieurs actions étant effectuées si une ou plusieurs personnes se trouvent dans l'habitacle du véhicule,
**caractérisé en ce que** ladite une ou les plusieurs actions comprennent le fait qu'une commande d'arrêt indiquant que le véhicule doit s'arrêter est envoyée au véhicule par un réseau de communication,
- le dispositif de vérification (203) comprenant un système de surveillance externe au véhicule pour surveiller l'habitacle du véhicule quant à la présence d'une ou de plusieurs personnes,
- le dispositif (201) comprenant une interface de communication qui est réalisée pour communiquer par le réseau de communication et pour envoyer la commande d'arrêt au véhicule.

10. Programme informatique, comprenant du code programme pour effectuer le procédé selon l'une quelconque des revendications 1 à 8 si le programme informatique est exécuté sur un ordinateur.
